# EUROPEAN PATENT APPLICATION

(11) **EP 1 298 345 A1**
(43) Date of publication of application: **02.04.2003**
(21) Application number: 02256713.5
(22) Date of filing: 26.09.2002
(51) Int. Cl.: F16D 69/02

(54) **Non-asbestos friction material**

(30) Priority: 27.09.2001 JP 2001297345
(71) Applicant: NISSHINBO INDUSTRIES, INC., Chuo-ku, Tokyo (JP)
(72) Inventor: Tsugawa, Kazuo, c/o Tatebayashi Plant, Oura-machi, Oura-gun, Gunma-ken (JP); Hanzawa, Koichi, c/o Tatebayashi Plant, Oura-machi, Oura-gun, Gunma-ken (JP)
(74) Representative: Stuart, Ian Alexander

(57) **Abstract**

A non-asbestos friction material is made of a molded and cured composition comprising a fibrous base other than asbestos, a binder and a filler. The filler includes barium sulfate having an average particle size of 20 to 500 µm. Friction materials thus constituted can be endowed with a porosity of 5 to 25%. In addition, they have a good resistance to fade, a good coefficient of friction at high speed, and outstanding strength and wear resistance.

## Description

The present invention relates to non-asbestos friction materials. Preferred embodiments are highly suitable for use as brake pads, brake linings and clutch facings in automobiles and various kinds of industrial machinery.

### Prior Art

A variety of inorganic fibers are used in automotive friction materials, and especially disk pads, to provide outstanding friction performance and noise characteristics. In particular, common use has been made of various types of whiskers, which are hard fibers that are effective for braking, and rock wool, which provides good strength.

JP-A 63-280936 describes how glass fibers by themselves do not provide adequate porosity, and discloses the use of 3 to 15 vol % of potassium titanate fibers to ensure a porosity of 10 to 25%.

Because inorganic fibers of this type which have a length of at least 5 µm, a diameter of up to 3 µm and an aspect ratio greater than 3 are known to be inhalable and potentially carcinogenic, efforts are currently being made to avoid their use. That is, the artificial inorganic fibers that have been used up until now are similar in shape to asbestos and are thought to be capable of triggering cancer in the same way as asbestos. Hence the interest in minimizing their use. Requirements for avoiding the use of similarly shaped fibers and materials which generate similarly shaped fibers as they break down are expected to become increasingly stringent.

Yet, while the use of whisker-type fibers is being avoided because such fibers may be carcinogenic, when a fine powder is used in place of whisker-type fibers, pore retention can be a problem. This becomes particularly serious when replacing fibers used in large quantities, such as potassium titanate fibers. Limiting the content of whisker-type fibers lowers the porosity of the friction material and detracts from its fade resistance and its friction coefficient at high speed.

The friction material can be molded under applied heat while varying the molding temperature and pressure to increase porosity, but this drastically lowers its mechanical strength. JP-A 2-125115 tries to get around this by carrying out molding under applied heat and pressure using a mold in which portions of the mold surface are recessed. Still, the fact remains that increasing the porosity by varying the molding pressure and temperature during hot molding markedly lowers the mechanical strength and wear resistance of the resulting friction material.

### SUMMARY OF THE INVENTION

It would therefore be desirable to provide a non-asbestos friction material which maintains a suitable porosity, has a good fade resistance, and exhibits a good friction performance at high speed.

We have discovered that the inclusion of barium sulfate, which is ordinarily used as a fine powder, in the form of large particles having an average particle size of 20 to 500 µm makes it possible to obtain useful non-asbestos friction materials. Preferred embodiments may have sufficient porosity and/or have a good resistance to fade, and/or exhibit a good friction performance at high speed, and/or be endowed with excellent wear resistance.

Accordingly, the invention provides a non-asbestos friction material made by molding and curing a composition comprised of a fibrous base other than asbestos, a binder and a filler; wherein the filler includes barium sulfate having an average particle size of 20 to 500 µm.

### DETAILED DESCRIPTION OF EMBODIMENTS

As noted above, the non-asbestos friction material of the invention is made by molding and curing a composition consisting primarily of a fibrous base, a binder and a filler.

The fibrous base may be any non-asbestos inorganic fiber or organic fiber ordinarily used in friction materials. Illustrative examples of suitable fibrous bases include inorganic fibers such as metal fibers (e.g., iron, copper, brass, bronze, aluminum), glass fibers, rock wool, wollastonite, sepiolite, attapulgite and synthetic mineral fibers; and organic fibers such as carbon fibers, aramid fibers, aramid pulp, polyimide fibers, polyamide fibers, phenolic fibers, cellulose and acrylic fibers. These fibrous bases may be used alone or as combinations of two or more thereof.

The fibrous base may be used in the form of short fibers or a powder, and is included in an amount of preferably 10 to 50 vol %, and most preferably 15 to 40 vol %, based on the overall friction material composition.

The binder is preferably a thermoset resin binder, but may be any known binder commonly used in friction materials. Illustrative examples include phenolic resins, various rubber-modified phenolic resins such as high-ortho phenolic resins modified with acrylonitrile-butadiene rubber (NBR), NBR-modified phenolic resins and acrylic rubber-modified phenolic resins, and also melamine resins, epoxy resins, NBR, nitrile rubber and acrylic rubber. Any one or combinations of two or more of these may be used. In the practice of the invention, such binders are included in an amount of preferably at least 15 vol %, more preferably 15 to 30 vol %, and most preferably 15 to 25 vol %, based on the overall friction material composition.

The filler used in the friction material composition may be composed of organic fillers and inorganic fillers. Illustrative examples of suitable organic fillers include cashew dust, tire rubber particles, rubber dust (rubber powder and granules), nitrile rubber dust (vulcanized product) and acrylic rubber dust (vulcanized product). These may be used alone or as combinations of two or more thereof. Such organic fillers are included in an amount of preferably 5 to 30 vol %, and most preferably 10 to 25 vol %, based on the overall friction material composition.

Suitable inorganic fillers include slaked lime, barium sulfate, calcium carbonate, mica, vermiculite, coke, graphite and molybdenum disulfide, as well as metal powders such as iron, copper and aluminum. Such inorganic fillers can generally be included in an amount of 30 to 75 vol %, and preferably 30 to 65 vol %, based on the overall friction material composition. In the present invention, the filler includes in particular barium sulfate having a large particle size.

Barium sulfate is commonly used as a general-purpose constituent in friction materials, but the barium sulfate that has been used to date has an average particle size of 0.5 to 10 µm. Instead, the present invention make use of coarser granular barium sulfate having an average particle size of 20 to 500 µm, preferably 50 to 400 µm, and most preferably 70 to 300 µm. Such granular barium sulfate is preferably obtained by either grinding and screening natural flotation grade barium sulfate or by molding and grinding or granulating precipitated barium sulfate together with a phenolic resin. The ground or granulated barium sulfate is then sized to the above-indicated average particle size.

The above coarse granular barium sulfate accounts for preferably 3 to 30 vol %, and most preferably 10 to 30 wt %, of the overall friction material composition. Too low a content of such barium sulfate fails to elicit the desired effects of the invention, such as increased porosity and better resistance to fade. On the other hand, too high a content results in increased wear and poor strength.

The friction material of the invention is generally produced by uniformly blending the above-described components in a suitable mixer such as a Henschel mixer, Loedige mixer or Eirich mixer, and preforming the blend in a mold. The preform is then molded at a temperature of 130 to 200°C and a pressure of 100 to 1,000 kg/cm² for a period of 2 to 15 minutes.

The resulting molded article is typically postcured by heat treatment at 140 to 250°C for a period of from 2 to 48 hours, then painted, baked and surface-ground as needed to give the finished article.

In the case of automotive disk pads, production may be carried out by placing the preform on an iron or aluminum plate that has been pre-washed, surface-treated and coated with an adhesive, molding the preform in this state within a mold, and subsequently heat-treating, painting, baking and surface-grinding.

The non-asbestos friction material of the invention can be used in a broad range of applications, including brake linings, clutch facings, disk pads, paper clutch facings and brake shoes in automobiles, large trucks, railroad cars and various types of industrial machinery.

### EXAMPLES

Examples and comparative examples are given below by way of illustration, and are not intended to limit the invention.

### Examples 1 to 6, Comparative Examples 1 to 3

Friction material compositions formulated as shown in Table 1 were uniformly blended in a Loedige mixer and preformed in a pressure mold under a pressure of 100 kg/cm² for a period of 1 to 3 minutes. Next, the preforms were molded at a temperature and pressure of 160°C and 250 kg/cm² for a period of 2 to 10 minutes, then postcured by 5 hours of heat treatment at 200°C, yielding automotive brake pads in the respective examples.

The brake pads obtained in Examples 1 to 6 and in Comparative Examples 1 to 3 were subjected to friction tests under the following conditions, and to performance evaluations under the criteria indicated below.

### <Friction Test Conditions>

Friction tests were carried out in accordance with JASO C406 ("Dynamometer Test of Brake System in Automobiles").

### <Evaluation of Performance>

The performances of the friction materials produced in the examples and comparative examples were evaluated as follows.
(1) Coefficient of Friction
   Minimum coefficient of friction in first and second fade and recovery tests.
   Good: minimum friction coefficient > 0.30
   Acceptable: minimum friction coefficient > 0.20
(2) Amount of Wear
   Depth of wear in performance test.
   Good: amount of wear < 0.45 mm
   Acceptable: amount of wear < 0.60 mm
(3) Porosity
   Measured in accordance with JIS D4418.
(4) Shear Strength
   Measured by the shear test method described in JIS D4415.
   Good: ≤40 kg/cm²
   Acceptable: 35 to 39 kg/cm²

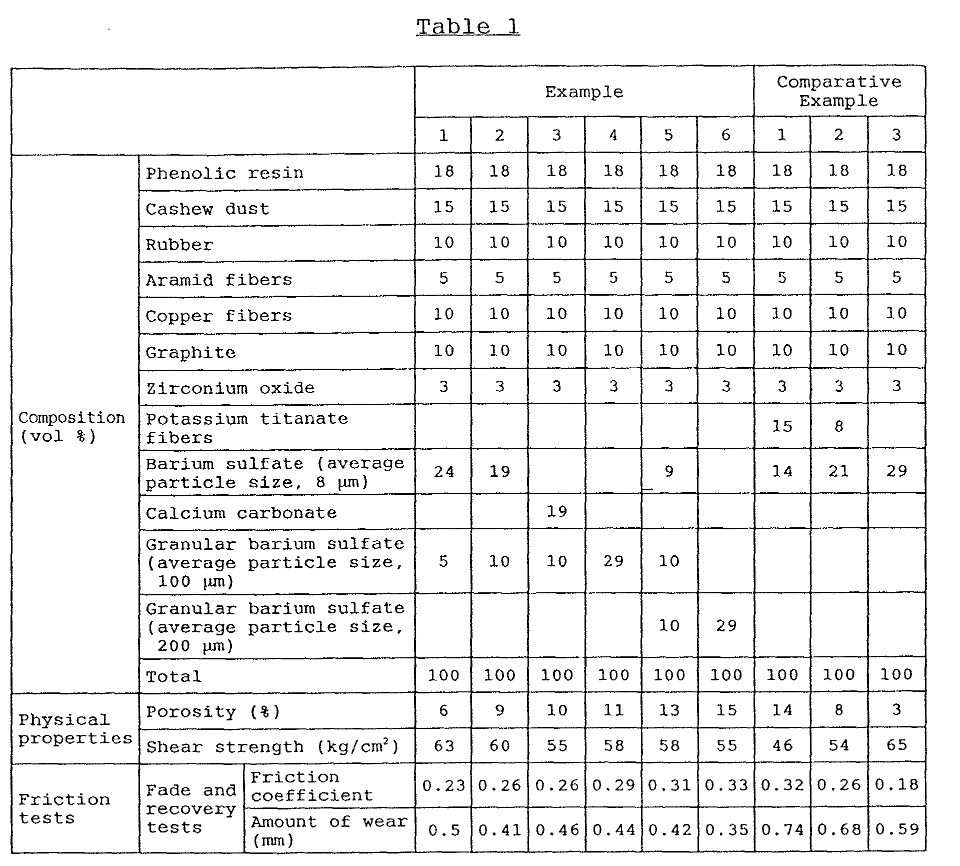

As has been discussed above and is apparent from the results in Table 1, the friction materials of the invention can be endowed with a porosity of at least 5%, and preferably at least 10%, but not more than 25%, and preferably not more than 20%. Moreover, they have a good resistance to fade, a good coefficient of friction at high speed, and outstanding strength and wear resistance.

Japanese Patent Application No. 2001-297345 is incorporated herein by reference.

Although some preferred embodiments have been described, many modifications and variations may be made thereto in light of the above teachings. It is therefore to be understood that the invention may be practiced otherwise than as specifically described.

## Claims

1. A non-asbestos friction material made by molding and curing a composition comprising a fibrous base other than asbestos, a binder and a filler; wherein the filler includes barium sulfate having an average particle size of 20 to 500 µm.

2. The non-asbestos friction material of claim 1, wherein the barium sulfate is obtained by grinding natural flotation grade barium sulfate, then sizing the ground barium sulfate to an average particle size of 20 to 500 µm.

3. The non-asbestos friction material of claim 1, wherein the barium sulfate is obtained by molding and grinding or granulating precipitated barium sulfate together with a phenolic resin, then sizing to an average particle size of 20 to 500 µm.

4. The non-asbestos friction material of any preceding claim having a barium sulfate content of 3 to 30 vol %, based on the overall composition.

5. The non-asbestos friction material of any of claims 1-3 having a content of barium sulfate of said average particle size of 3 to 30 vol % based on the overall composition.

6. The non-asbestos friction material of any preceding claim having a porosity of at least 10%.
